Europäisches Patentamt

European Patent Office

Office européen des brevets

(19)

(11) EP 0 518 343 B1

(12) EUROPÄISCHE PATENTSCHRIFT

(45) Veröffentlichungstag und Bekanntmachung des Hinweises auf die Patenterteilung:
28.01.1998 Patentblatt 1998/05

(51) Int Cl.⁶: H04Q 7/20

(21) Anmeldenummer: 92109879.4

(22) Anmeldetag: 11.06.1992

(54) **Verfahren zur Ermittlung einer temporären Nummer (TMSI) in einer Teilnehmerdatenbank für einen Teilnehmer**

Method of determining a temporary subscriber number (TMSI) in a subscriber database

Méthode pour déterminer une identité temporaire d'abonné (TMSI) dans une base de données d'abonnés

(84) Benannte Vertragsstaaten:
BE CH DE DK ES FR GB IT LI SE

(30) Priorität: 14.06.1991 DE 4119573

(43) Veröffentlichungstag der Anmeldung:
16.12.1992 Patentblatt 1992/51

(73) Patentinhaber: ALCATEL ALSTHOM COMPAGNIE GENERALE D'ELECTRICITE
75008 Paris (FR)

(72) Erfinder: Pfundstein, Matthias Jörg, Dr.
W-7000 Stuttgart 1 (DE)

(74) Vertreter: Brose, Gerhard, Dipl.-Ing. et al
Alcatel Alsthom
Intellectual Property Department,
Postfach 30 09 29
70449 Stuttgart (DE)

(56) Entgegenhaltungen:
EP-A- 0 117 906

• TELEPHONE ENGINEER AND MANAGEMENT
Bd. 95, Nr. 2, 15. Januar 1991, US Seiten 50 - 54
DELORY ET AL. 'Security & Saturation Solutions for GSM'

**Beschreibung**

Die Erfindung betrifft ein Verfahren zur Ermittlung einer temporären Nummer (TMSI) in Teilnehmerdatenbanken, wie z.B. bei Mobilfunksystemen (siehe z.B. TELEPHONE ENGINEER AND MANAGEMENT Bd. 95, Nr. 2, 15. Januar 1991, US Seiten 50 - 54 DELORY ET AL. 'Security & Saturation Solutions for GSM'.

In üblichen Telefonvermittlungsstellen ist die Fluktuation von Teilnehmern nur gering und im wesentlichen bestimmt durch Ortswechsel der Teilnehmer. Dadurch ist die Fluktuation von Teilnehmerdaten in den zugehörigen Teilnehmerdatenbanken ebenfalls gering. Bei Mobilfunksystemen ist das völlig anders. Zwar sind die Teilnehmerdaten von Mobilfunkteilnehmern dort, wo die Mobilfunkstationen gemeldet sind, in einem sogenannten Home Location Register (HLR) gespeichert, doch ist im allgemeinen nicht damit zu rechnen, daß ein Mobilfunkteilnehmer sich ständig im Funkeinzugsbereich derselben Vermittlungsstelle aufhält, in der seine Teilnehmerdaten gespeichert sind. Vielmehr ist denkbar, daß ein Mobilfunkteilnehmer weit entfernt von seinem Wohnort, u.U. in einem anderen Land, eine Telefonverbindung mit einem ebenfalls reisenden anderen Mobilfunkteilnehmer aufbauen will. Um derartige Verbindungen zu ermöglichen, ist das Gebiet, in dem das Mobilfunksystem betrieben werden soll, mit einer Reihe von Mobilfunkvermittlungsstellen (MSC = Mobile Switching Center) überzogen. Im Gegensatz zu Datenbanken üblicher Telefonvermittlungsstellen müssen die Datenbanken von Mobilfunkvermittlungsstellen, sogenannte Visitors Location Registers (VLR) auch bei hoher Teilnehmerfluktuation noch sinnvoll arbeiten.

In der DE 40 21 632 A1 wird ein Verfahren zum Einordnen oder Auffinden von Teilnehmerdatensätzen in einer Teilnehmerdatenbank mit hoher Teilnehmerfluktuation vorgeschlagen. Bei diesem Verfahren wird einer aus N Ziffern bestehenden Teilnehmernummer IMSI (International Mobile Station Identity) mit Hilfe eines Algorithmus ein Datensatz in einem Speicherbereich eindeutig zugeordnet. Dadurch wird der Zugriff auf einen VLR-Teilnehmerdatensatz ermöglicht. Der Algorithmus erzeugt virtuelle Indizes V0 bis V4, mit deren Hilfe der Datensatz in einem Speicherbereich ermittelt wird. Eine 15-stellige IMSI kann durch den Algorithmus wie folgt in unabhängige Werte V0 ... V4 abgebildet werden:

$$VC = (D(0)+D(1)+D(2)+D(3)+D(4)+D(5)+D(6)+D(7)+D(8)+D(9)$$

$$+D(10)+D(11)+D(12)+D(13)+D(14)) \ \%2$$

$$V0 = (\ 1*(D(9) + D(13) + D(0))$$

$$+2*(D(7) +D(12) +D(2))$$

$$+3*(D(11) + D(14) + D(3))$$

$$+5*(D(10) + D(6) + D(4))$$

$$+7*(D(8) + D(5) + D(1)) + VC) \ \%10$$

$$V1 = (1*(D(10) + D(14) + D(1))$$

$$+2*(D(8) + D(13) + D(3))$$

$$+3*(D(7) + D(5) + D(4))$$

$$+5*(D(11) + D(12) + D(0))$$

$$+7*(D(9) + D(6) + D(2))) \ \%10$$

$$V2 = (1*(D(11) + D(5) + D(2))$$

$$+2*(D(9) + D(14) + D(4))$$

$$+3*(D(8) + D(6) + D(0))$$

$$+5*(D(7) + D(13) + D(1))$$

$$+7*(D(10) + D(12) + D(3))) \% 10$$

$$V3 = (1*(D(7) + D(6) + D(3))$$

$$+2*(D(10) + D(5) + D(0))$$

$$+3*(D(9) + D(12) + D(1))$$

$$+5*(D(8)+ D(14) + D(2))$$

$$+7*(D(11) + D(13)+ + D(4))) \% 10$$

$$V4 = ( 1*(D(8) + D(12) + D(4))$$

$$+2*(D(11) + D(6) + D(1))$$

$$+3*(D(10) + D(13) + D(2))$$

$$+5*(D(9) + D(5) + D(3))$$

$$+7*(D(7) + D(14) + D(0))) \% 10$$

Darin bedeuten:

V0 bis V4:          die Ziffern der virtuellen Indizes,
D(0) bis D(14):      die Ziffern der Teilnehmernummer,
A%B:              A Modulo B,
VC:                eine aus allen 15 Ziffern der IMSI berechnete Korrekturgröße.

Für wiederholte Zugriffe bietet die damit gebildete temporäre Teilnehmernummer TMSI (Temporary Mobile Subscriber Identity) einen geschickteren "Schlüssel", da die IMSI aus 15 Ziffern besteht; außerdem kann die Identität des Teilnehmers mit der IMSI bei unverschlüsselten Zugriffen (Funkstrecke) nicht anonym gehalten werden.

Aufgabe der Erfindung ist es daher, ein Verfahren anzugeben, bei dem jedem Teilnehmer eine temporäre Teilnehmernummer TMSI in einem VLR zugewiesen wird. Mit Hilfe dieser TMSI sollen die Kommunikationsverbindungen zwischen VLR und Teilnehmer erfolgen. Gelöst wird diese Aufgabe durch ein Verfahren mit der Merkmalskombination des Hauptanspruches. Vorteilhafte Weiterbildungen ergeben sich aus den Unteransprüchen. Das erfindungsgemäße Verfahren legt eine vier Byte lange TMSI zugrunde. Die Anonymität des Teilnehmers wird durch häufiges Wechseln von Elementen der TMSI gewährleistet.

Ein Vorteil des erfindungsgemäßen Verfahrens liegt in der eindeutigen Adressierung von bis zu $10^6$ Teilnehmern. Ein weiterer Vorteil ist darin zu sehen, daß eine Verwechslung der Datensätze auch dann ausgeschlossen bleibt, wenn ein Datensatz in der Datenbank gelöscht wird oder wenn alle Datensätze einer Speicherregion MR verloren gehen.

Ein weiterer Vorteil des Verfahrens besteht darin, daß Datenbankerweiterungen und Umkonfigurationen von Daten unterstützt werden. Darüber hinaus werden Datenverluste im Speicher abgefangen.

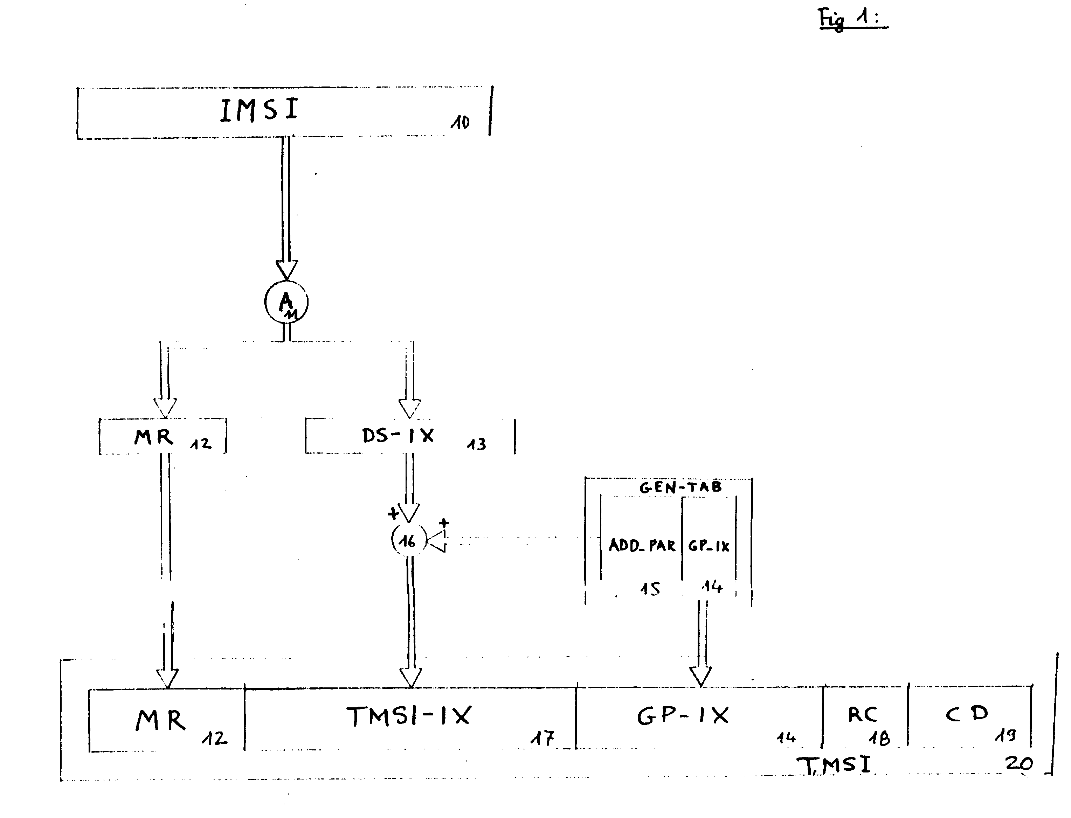

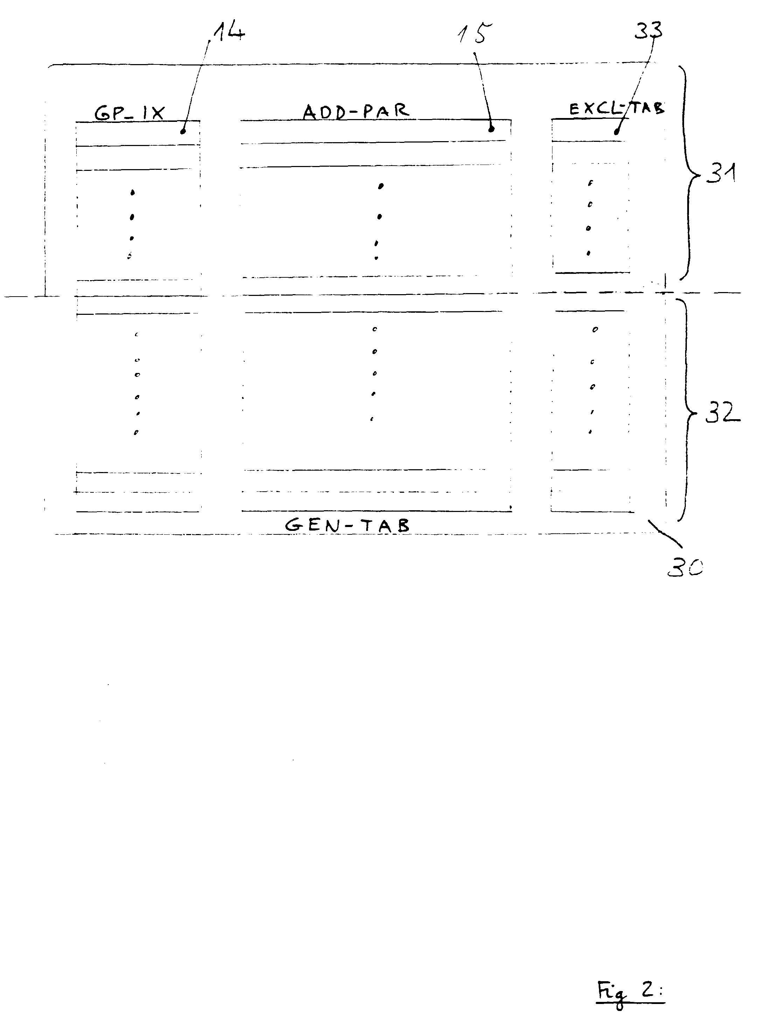

Ein Ausführungsbeispiel der Erfindung wird anhand der Figuren 1 und 2 beschrieben und näher erläutert. Es zeigen:

Fig. 1     eine schematische Darstellung der TMSI-Ermittlung,

Fig. 2     den Aufbau der Generationstabelle GEN-TAB,

Fig. 3     den Aufbau der Exclusionstabelle EXCL-TAB.

In Fig. 1 ist ein Blockschaltbild von der erfindungsgemäßen Zuweisung einer TMSI 20 zu einer IMSI 10 dargestellt.

Über einen Algorithmus 11 im VLR wird dem Teilnehmer mit einer IMSI 10 eine Speicherregion MR 12 und ein Datensatz mit einem Datensatzindex DS-IX 13 in dieser Speicherregion zugeordnet. Dieser Zusammenhang kann nach der genannten DE 40 21 632 A1 vorgenommen werden. Der Wert für die Speicherregion MR 12 ist sechs (oder fünf) Bit lang; der Wert für den Datensatzindex DS-IX 13 ist 14 (oder 15)Bit lang.

Damit können z.B. 64 Speicherregionen mit jeweils 16384 Datensätzen pro Speicherregion MR 12 adressiert werden. Der Wert für die Speicherregion MR 12 belegt sechs Bits der TMSI 20. Die eindeutige Zuordnung eines Datenspeicherplatzes zu einem Teilnehmer erfolgt also mit diesen beiden Parametern. Darüber hinaus muß aber die Anonymität des Teilnehmers gewährleistet sein. Gleichzeitig müssen auch Verwechslungen beim Löschen von Datensätzen oder Speicherregionen ausgeschlossen sein. Dazu dienen die folgenden Schritte im erfindungsgemäßen Verfahren.

Um eine Verschlüsselung der Teilnehmeridentität zu ermöglichen, wird ein Additionsparameter ADD-PAR 15 aus einer Generationstabelle GEN-TAB 30 (siehe Figur 2) erzeugt. Die Werte ADD-PAR 15 sind 14-Bit lange Pseudozufallswerte und werden mit Hilfe eines Generationsparameterindexes GP-IX 14 aus der Generationstabelle GEN-TAB 30 adressiert. Der Additionsparameter ADD-PAR 15 wird dem Datensatzindex DS-IX 13 hinzuaddiert (16). dadurch entsteht ein 15-Bit langer TMSI-Index TMSI-IX 17, der 15 Bits der TMSI 20 belegt.

Damit eine Identifizierung eines Teilnehmers ausgeschlossen bleibt, wird die TMSI 20 häufig gewechselt. Zur Erzeugung einer neuen TMSI 20 für einen Teilnehmer mit seinem eindeutig zugeordneten Datensatz wird der Generationsparameterindex GP-IX 14 inkrementiert. Mit dem neuen Wert für GP-IX 14 wird in der Generationstabelle GEN-TAB 30 der neue pseudozufällige Additionsparameter ADD-PAR 15 erzeugt. Nach der Addition mit dem (für einen Teilnehmer in einem VLR konstanten) Datensatzindex DS-IX 13 entsteht ein neuer Wert für den TMSI-Index TMSI-IX 17 in der neuen TMSI 20.

Es ist denkbar, daß die Summen aus dem Datensatzindex DS-IX 13 und dem pseudozufälligen Additionsparameter ADD-PAR 15 für zwei verschiedene Teilnehmer in einem VLR, die die gleiche Speicherregion MR 12 zugeordnet bekommen, gleich werden, obwohl die Summanden unterschiedlich sind. Um diese Uneindeutigkeit auszuschließen, enthält die TMSI 20 auch den 6-Bit langen Wert des Generationsparameterindex GP-IX 14, da sich die beiden Teilnehmer in ihren Generationsparameterindizes GP-IX 14 unterscheiden. Dieser Wert schließt sich in der TMSI 20 an den Wert für den TMSI-Index TMSI-IX 17 an, der aus der Addition von DS-IX 13 und ADD-PAR 15 resultiert.

Weitere Bestandteile der Struktur der TMSI 20 sind ein Recovery-Code RC 18 und ein Configuration-Diskriminator 19. Beide Parameter erlauben weitere Freiheitsgrade bei der eindeutigen Zuordnung von Datensätzen zu Teilnehmernummern IMSI 10. Diese beiden Parameter sollen insbesondere Verwechslungen beim Löschen von einem Datensatz oder von Speicherregionen MR 12 ausschließen. Außerdem wird mittels dieser Parameter eine Verwechslung nach einer Umkonfiguration oder nach einer Erweiterung der Datenbank vermieden.

Der Recovery-Code RC 18 ist ein 2-Bit langer Wert, der pro Speicherregion MR 12 auf Massenspeicher (z.B. Disk) gesichert ist. Er wird hochgezählt, wenn die Daten einer Speicherregion MR 12 verloren gehen. Läuft der Recovery-Code RC 18 beim Hochzählen auf Null über, dann können die zur Speicherregion MR 12 gehörenden Werte von dem Configuration-Diskriminator CD 19 inkrementiert werden. Der Wert für den 3-Bit langen Configuration-Diskriminator CD 19 ist auch pro Speicherregion MR 12 auf Massenspeicher gesichert. Er wird auch noch hochgezählt, wenn die Daten umkonfiguriert werden, d.h. ihren Speicherplatz wechseln.

Mit diesen beiden Parametern, die fünf Bits der TMSI 20 belegen, wird z.B. eine Verwechslung der Datensätze ausgeschlossen, in dem Fall, daß alle Datensätze aus einer Gruppe von Speicherregionen MR 12 (z.B. wegen Stromausfall) verloren gehen, und der so gelöschte Teil der Datenbank danach von anderen Teilnehmern neu eingenommen wird. Wenn sich dann die gelöschten Teilnehmer mit ihrer früher zugeteilten TMSI 20 melden, kann es vorkommen, daß ein neuer Teilnehmer die gleiche Speicherregion MR 12, den gleichen Wert für TMSI-IX 17 und den gleichen Wert für GP-IX 14 besitzt. Die Verwechslung wird in diesem Fall dadurch ausgeschlossen, daß die Werte für den Recovery-Code RC 18 (bzw. für den Configuration-Diskriminator CD 19) des neuen und des alten Teilnehmers unterschiedlich sind.

In Fig. 2 wird der prinzipielle Aufbau der Generationstabelle GEN-TAB 30 erläutert. Gleiche Bezugszeichen bezeichnen die gleichen Elemente wie in Fig. 1.

Zum besseren Verständnis der Arbeitsweise des erfindungsgemäßen Verfahrens stellt man sich die Generationstabelle GEN-TAB 30 in einer ersten Hälfte 31 und einer zweiten Hälfte 32 aufgeteilt vor.

Die Werte von den Additionsparametern ADD-PAR 15 sind verschiedene Pseudozufallszahlen. Die Differenz zwischen dem maximalen und dem minimalen Wert, den der Additionsparameter ADD-PAR 15 für einen bestimmten Generationsparameterindex GP-IX 14 annehmen kann, beträgt z.B. 512. Die TMSI 20 wird, wie oben beschrieben, ständig geändert, indem der Generationsparameterindex GP-IX 14 inkrementiert wird. Nach einer bestimmten Zeit (z. B. 1 Tag) werden die Additionsparameter ADD-PAR 15 neu generiert in einer um 512 versetzten Bandbreite. Dabei dürfen die zugehörigen Generationsparameterindizes GP-IX 14 von keinem gespeicherten Datensatz in der TMSI benutzt sein. Damit ist die Hälfte der Generationsparameterindizes GP-IX 14 zu einem Zeitpunkt gesperrt. Dieses Problem wird dadurch gelöst, daß man die erste Hälfte 31 und die zweite Hälfte 32 alternierend einsetzt. Sollen die Additionsparameter ADD-PAR 15 von einer der beiden Hälften (31 oder 32) geändert werden, so bleibt diese Hälfte gesperrt und die TMSI 20 wird mit den Generationsparameterindizes GP-IX 14 der anderen Hälfte erzeugt.

Auf diese Art und Weise können 32 verschiedene TMSI 20 für einen Teilnehmer generiert werden, bevor Werte für die Additionsparameter ADD-PAR 15 neu generiert werden müssen. Benötigt ein Teilnehmer mehr als 32 TMSI 20 in der bestimmten Zeit (z.B. ein Tag), dann werden die Generationsparameterindizes GP-IX 14 der eingesetzten Hälfte zyklisch durchlaufen. Da dieser Fall unwahrscheinlich ist, bleibt ein Rückschluß auf die Identität des Teilnehmers praktisch ausgeschlossen.

Die Bandbreite von 512 paßt 32 Mal in den Wertevorrat des Additionsparameters ADD-PAR 15. Es dauert also z. B. 32 Tage, bevor die gleiche Bandbreitenlage für einen bestimmten Generationsparameterindex GP-IX 14 wieder auftritt. Die Wahrscheinlichkeit, daß nach den 32 Perioden für einen Generationsparameterindex GP-IX 14 auch wieder der gleiche Additionsparameterindex ADD-PAR 15 zugewiesen wird, beträgt weniger als 0,2% (entsprechend 1/512).

Wird ein Datensatz längere Zeit nicht benutzt, kann er gelöscht werden. Die betroffene TMSI 20 und die IMSI 10 werden in eine Exclusions-Tabelle EXCL-TAB 33 eingetragen. Für die Wiedervergabe einer TMSI kann so diese TMSI ausgeschlossen werden, indem für den zugehörigen Generationsparameterindex GP-IX 14 ein Eintrag in der Exclusions-Tabelle EXCL-TAB 33 eingetragen wird.

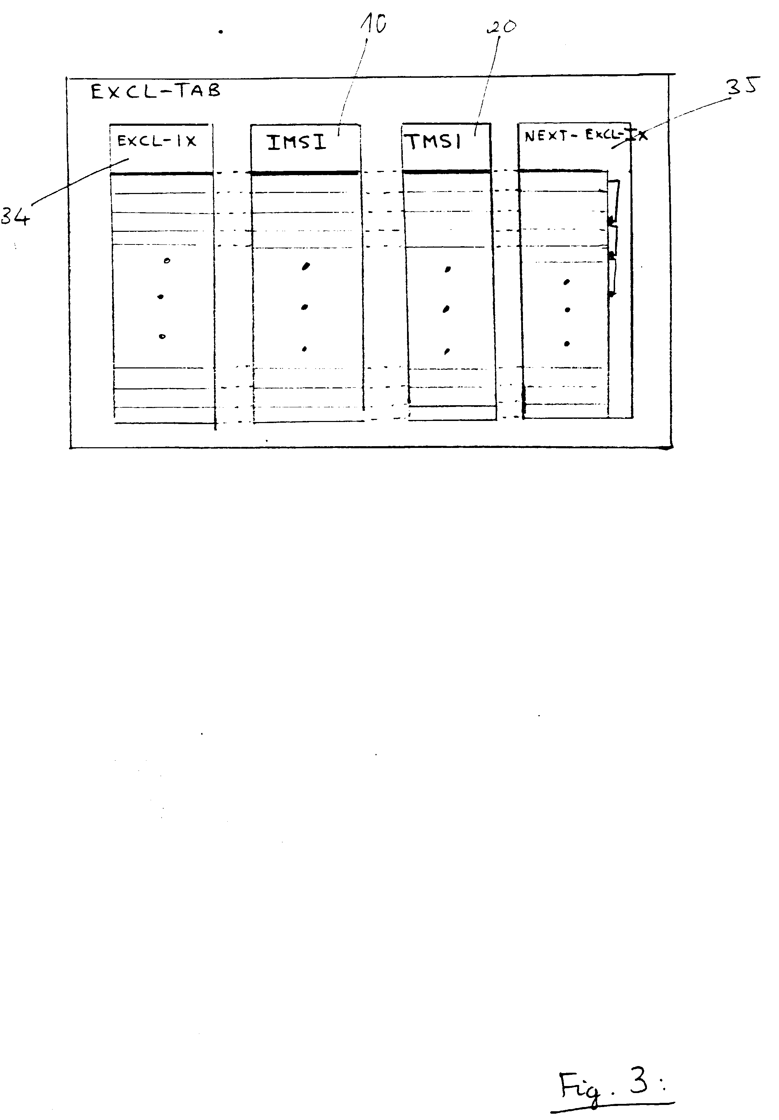

Die Struktur der Exclusions-Tabelle EXCL-TAB 33 wird in Fig. 3 beschrieben. Der Eintrag für den auszuschließenden Generationsparameterindex GP-IX 14 wird in der Spalte für den Exclusionsindex EXCL-IX 34 eingetragen. Es werden auch die dazugehörigen TMSI und IMSI notiert. Ein weiterer Eintrag ist der nächste Exclusionsindex NEXT-EXCL-IX 35, mit deren Hilfe die Suche nach ausgeschlossenen TMSIn fortgesetzt wird.

Eine TMSI, die in der Exclusions-Tabelle EXCL-TAB 33 eingetragen wird, wird nicht erneut vergeben. Sollte für einen Teilnehmer zufällig eine gesperrte TMSI 20 generiert werden, muß mit dem nächsten Generationsparameterindex GP-IX 14 eine neue TMSI 20 generiert werden.

Durch den Eintrag in der Tabelle EXCL-TAB 33 wird eine Verwechslung auch dann ausgeschlossen, wenn ein Datensatz und damit seine TMSI 20 in der Datenbank gelöscht wird, weil sich der Teilnehmer für eine bestimmte Zeit nicht gemeldet hat. Sobald einer IMSI eine andere TMSI zugeordnet ist, kann die IMSI (samt alter TMSI) aus der EXCL-Tabelle gelöscht werden. Durch diese Maßnahme wird auch die Gefahr behoben, daß der Speicherplatz mit alten, unbenutzten Datensätzen verbraucht wird.

**Patentansprüche**

1. Verfahren zur Ermittlung einer temporären Teilnehmernummer (TMSI) in einem Telekommunikationsnetzwerk mit einer Teilnehmerdatenbank, aufgrund einer dem Teilnehmer dauernd zugeordneten Teilnehmernummer (IMSI), **gekennzeichnet durch** folgende Verfahrensschritte:

   - Ermitteln eines Speicherbereiches (MR) und eines Datensatzindex (DS-IX) in der Teilnehmerdatenbank aus der dauernd zugeordneten Teilnehmernummer (IMSI), wobei der Speicherbereich (MR) ein erster Teil der temporären Teilnehmernummer (TMSI) ist.

   - Verschlüsseln des Datensatzindex (DS-IX) durch Addition eines von einem Generationsparameterindex (GP-IX) abhängigen Additionsparameters (ADD-PAR), wobei das Ergebnis der Addition und der Generationsparameterindex (GP-IX) ein zweiter und ein dritter Teil der temporären Teilnehmernummer (TMSI) sind.

   - Hinzufügen von Informationen über den Zustand der Teilnehmerdatenbank als weitere Teile der temporären Teilnehmernummer (TMSI).

2. Verfahren nach Anspruch 1, dadurch gekennzeichnet, daß die Generationsparameterindizes (GP-IX) eine Generationstabelle (GEN-TAB) adressieren und so die Additionsparameter (ADD-PAR) erzeugen.

3. Verfahren nach Anspruch 2, dadurch gekennzeichnet, daß die Generationsparameterindizes (GP-IX) zur Generierung einer neuen temporären Teilnehmernummer (TMSI) hochgezählt werden.

4. Verfahren nach Anspruch 2, dadurch gekennzeichnet, daß die Werte der Generationstabelle (GEN-TAB) in zeitlichen Abständen geändert werden.

5. Verfahren nach Anspruch 1, dadurch gekennzeichnet, daß die Informationen über den Zustand der Teilnehmerdatenbank in einem Recovery-Code (RC) und in einem Configuration-Discriminator (CD) enthalten sind.

**6.** Verfahren nach Anspruch 5, dadurch gekennzeichnet, daß der Recovery-Code (RC) hochgezählt wird, wenn die Daten eines Speicherbereichs (MR) verlorengehen.

**7.** Verfahren nach Anspruch 5, dadurch gekennzeichnet, daß der Configuration-Discriminator (CD) hochgezählt wird, wenn Daten ihren Speicherplatz wechseln.

**8.** Verfahren nach Anspruch 5, dadurch gekennzeichnet, daß der Configuration-Discriminator (CD) inkrementiert werden kann, wenn der Recovery-Code (RC) beim Hochzählen auf 0 überläuft.

**9.** Verfahren nach Anspruch 1, dadurch gekennzeichnet, daß die temporäre Teilnehmernummer (TMSI) aus 32 Bit besteht.

**10.** Verfahren nach Anspruch 1, dadurch gekennzeichnet, daß die temporäre Teilnehmernummer (TMSI) eines Teilnehmers zusammen mit dessen dauernd zugeordneter Teilnehmernummer (IMSI) in eine Tabelle (EXCL-TAB) eingetragen wird, bevor sie aus der Datenbank gelöscht wird.

## Claims

**1.** A method of determining a temporary subscriber number (TMSI) in a telecommunication network comprising a subscriber data base on the basis of a subscriber number (IMSI) permanently assigned to a subscriber, **characterized by** the following steps:

- determining a memory area (MR) and a data-record index (DS-IX) in the subscriber data base from the permanently assigned subscriber number (IMSI), the memory area (MR) being a first part of the temporary subscriber number (TMSI);

- encoding the data-record index (DS-IX) by adding an addition parameter (ADD-PAR) which is dependent on a generation parameter index (GP-IX), the result of the addition and the generation parameter index (GP-IX) being a second and a third part of the temporary subscriber number (TMSI), and

- adding information on the status of the subscriber data base as further parts of the temporary subscriber number (TMSI).

**2.** A method as claimed in claim 1, characterized in that the generation parameter indices (GP-IX) address a generation parameter table (GEN-TAB),thus generating the addition parameters (ADD-PAR).

**3.** A method as claimed in claim 2, characterized in that to generate a new temporary subscriber number (TMSI), the generation parameter indices (GP-IX) are incremented.

**4.** A method as claimed in claim 2, characterized in that the values of the generation parameter table (GEN-TAB) are changed at time intervals.

**5.** A method as claimed in claim 1, characterized in that the information on the status of the subscriber data base is contained in a recovery code (RC) and in a configuration discriminator (CD).

**6.** A method as claimed in claim 5, characterized in that the recovery code (RC) is incremented when the data of a memory area (MR) is lost.

**7.** A method as claimed in claim 5, characterized in that the configuration discriminator (CD) is incremented when data changes its location.

**8.** A method as claimed in claim 5, characterized in that the configuration discriminator (CD) can be incremented when the recovery code (RC) overflows to 0 during incrementation.

**9.** A method as claimed in claim 1, characterized in that the temporary subscriber number (TMSI) consists of 32 bits.

**10.** A method as claimed in claim 1, characterized in that the temporary subscriber number (TMSI) of a subscriber, together with the subscriber number (IMSI) permanently assigned to said subscriber, is entered into a table (EXCL-TAB) before being deleted from the data base.

**Revendications**

1. Procédé pour déterminer une identité temporaire d'abonné (TMSI) dans un réseau de télécommunications, comprenant une base de données d'abonnés, basée sur une identité permanente de l'abonné (IMSI), caractérisé par les étapes suivantes :

    - attribution d'une zone de mémoire (MR) et d'un index d'enregistrement (DS-IX) dans la base de données des abonnés, à partir de l'identité permanente de l'abonné (IMSI), la zone de mémoire (MR) formant une première partie de l'identité temporaire de l'abonné (TMSI) ;
    - codage de l'index d'enregistrement (DS-IX) par addition d'un paramètre d'addition (ADD-PAR), qui dépend d'un index des paramètres de génération (GP-IX), le résultat de l'addition et l'index des paramètres de génération (GP-IX) constituant une deuxième et une troisième partie de l'identité temporaire de l'abonné (TMSI) ;
    - addition d'informations relatives à l'état de la base de donnée des abonnés et constituant une autre partie de l'identité temporaire de l'abonné (TMSI).

2. Procédé selon la revendication 1, caractérisé en ce que les index des paramètres de génération (GP-IX) adressent une table de génération (GEN-TAB) et génèrent ainsi les paramètres d'addition (ADD-PAR).

3. Procédé selon la revendication 2, caractérisé en ce que les index des paramètres de génération (GP-IX) sont incrémentés, afin de générer une nouvelle identité temporaire de l'abonné (TMSI).

4. Procédé selon la revendication 2, caractérisé en ce que les valeurs de la table de génération (GEN-TAB) sont modifiées dans des espaces de temps donnés.

5. Procédé selon la revendication 1, caractérisé en ce que les informations relatives à l'état de la base des données des abonnés sont stockées dans un code de correction (RC) et dans un discriminateur de configuration (CD).

6. Procédé selon la revendication 5, caractérisé en ce que le code de correction (RC) est incrémenté lorsque les données d'une zone de mémoire (MR) ont été perdues.

7. Procédé selon la revendication 5, caractérisé en ce que le discriminateur de configuration (CD) est incrémenté lorsque les données sont transférées vers un autre emplacement de la mémoire.

8. Procédé selon la revendication 5, caractérisé en ce que le discriminateur de configuration (CD) peut être incrémenté lorsque le code de correction (RC) dépasse 0 lors de l'incrémentation.

9. Procédé selon la revendication 1, caractérisé en ce que l'identité temporaire de l'abonné (TMSI) comprend 32 bits.

10. Procédé selon la revendication 1, caractérisé en ce que l'identité temporaire de l'abonné (TMSI) d'un abonné est reportée dans une table (EXCL-TAB) conjointement à l'identité permanente de l'abonné (IMSI), avant d'être effacée de la base de données.

Fig 1:

IMSI  10

A_M

DS-IX  13

MR  12

16  +/-

GEN-TAB
ADD_PAR | GP_IX
15       14

GP-IX  14

TMSI-IX  17

RC  18    CD  19

MR  12

TMSI  20

Fig 2:

Fig. 3: